# EUROPÄISCHE PATENTANMELDUNG

(11) **EP 0 616 976 A1**
(43) Veröffentlichungstag der Anmeldung: **28.09.1994**
(21) Anmeldenummer: 94100892.2
(22) Anmeldetag: 21.01.1994
(51) Int. Cl.: C02F 1/44, B01D 61/02

(54) **Einrichtung zum Herabsetzen der Wasserhärte**

(30) Priorität: 23.03.1993 DE 9304377 U
(71) Anmelder: Grünbeck Wasseraufbereitung GmbH, D-89420 Höchstädt (DE)
(72) Erfinder: Patocka, Friedrich, Dipl.-Ing-, D-89407 Dillingen (DE)
(74) Vertreter: Prüfer, Lutz H., Dipl.-Phys.

(57) **Zusammenfassung**

Es wird eine Einrichtung zum Herabsetzen der Wasserhärte mit einer Filtereinrichtung (1), die eingangsseitig mit einer Eingangsleitung (6) und ausgangsseitig mit einer Verbrauchsstelle (3) verbindbar ist, geschaffen. Damit die Härte von Wasser ohne Zugabe von Salzen oder anderen Wirkstoffen herabgesetzt wird, ist zwischen Ein- und Ausgang (2, 4) der Filtereinrichtung (1) eine Nanofiltrationsmembran (8) vorgesehen. Der eingangsseitig von der Nanofiltrationsmembran (8) befindliche Raum (7) der Filtereinrichtung (1) ist mit einer Rückführleitung (9) verbunden, die in die Eingangsleitung (6) einmündet.

## Beschreibung

Die Erfindung betrifft eine Einrichtung zum Herabsetzen der Wasserhärte.

Aufgabe der Erfindung ist es, die Härte von Wasser ohne Zugabe von Salzen oder anderen Wirkstoffen herabzusetzen.

Diese Aufgabe wird durch die in Schutzanspruch 1 gekennzeichnete Einrichtung zum Herabsetzen der Wasserhärte gelöst. Weiterbildungen der Erfindung sind in den Unteransprüchen gekennzeichnet. Dabei bleiben die erwünschten Mineralstoffe im Trinkwasser. Gleichzeitig werden mit der Einrichtung auch alle Schadstoffe wie Schwermetalle, organische Verunreinigungen (z. B. Pestizide aus der Landwirtschaft) usw. entfernt. Auch Keime und Bakterien werden zu über 99,99 Prozent entfernt. Selbst bei Nitraten wird eine Reduktion erreicht.

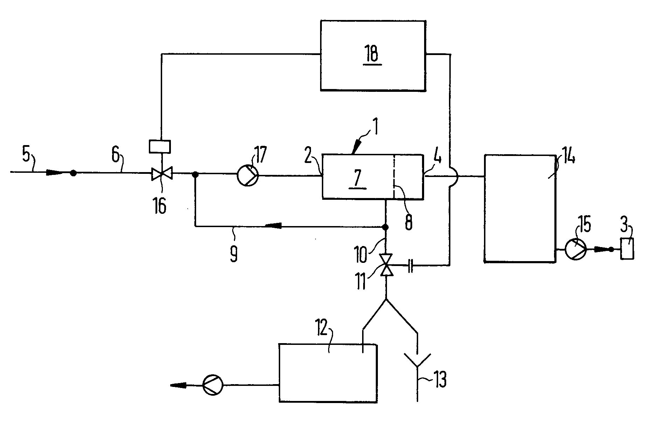

Weitere Merkmale und Zweckmäßigkeiten der Erfindung ergeben sich aus der Beschreibung eines Ausführungsbeispieles anhand der Figur.
- Die Fig. zeigt:: Eine schematische Darstellung der Einrichtung zum Herabsetzen der Wasserhärte.

Die Einrichtung umfaßt eine Filtereinrichtung 1 mit einem Eingang 2 und einem zu einer Verbrauchsstelle 3 führenden Ausgang 4. Der Eingang 2 ist mit einer Zufuhrleitung 5 über eine Eingangsleitung 6 verbunden.

Die Filtereinrichtung 1 weist einen Filterraum 7 auf. Dieser weist auf seiner Ausgangsseite vor dem Ausgang 4 eine Nanofiltrationsmembran 8 auf. Der eingangsseitige Teil des Filterraumes 7 weist nahe bei der Membran 8 einen mit einer Rückführleitung 9 verbundenen Ausgang auf. Die Rückführleitung mündet in die Eingangsleitung 6. Eine Abzweigung 10 der Rückführleitung 9 führt über eine Regeleinrichtung 11 zu einer Zisterne 12 bzw. einem Kanal 13.

Zwischen dem Ausgang 4 und der Verbrauchsstelle 3 ist ein Weichwasser-Vorratsbehälter 14 vorgesehen. Ausgangsseitig von dem Vorratsbehälter 14 ist eine Pumpe 15 der Verbrauchsstelle 3 vorgeschaltet.

Die Eingangsleitung 6 weist zwischen dem mit der Zufuhrleitung 5 verbundenen Eingang und der Stelle der Einspeisung der Rückführleitung 9 ein Steuerventil 16 und zwischen der Stelle der Einspeisung der Rückführleitung 9 und dem Eingang 2 eine Pumpe 17 auf. Ferner ist eine Steuerung 18 vorgesehen, die über einen Steuerausgang das die Pumpe 17 und über einen zweiten Steuerausgang das Steuerventil 16 ansteuert.

Die Nanofiltrationsmembran 8 ist so ausgebildet, daß das Rückhaltevermögen für dreiwertige Ionen größer 90 Prozent und vorzugsweise größer 95 Prozent, gegenüber zweiwertigen Ionen 50 bis 80 Prozent, gegenüber einwertigen Ionen 25 bis 60 Prozent und gegenüber organischen Stoffen 70 bis 99 Prozent beträgt.

Im Betrieb wird das über die Zufuhrleitung 5 zugeführte Wasser mittels der Pumpe 17 in den Filterraum 7 gepumpt. Das Wasser und die erwünschten Salze passieren die Nanofiltrationsmembran 8. Die unerwünschten Stoffe werden von der Membran 8 zurückgehalten und quasi mit einem Querstrom der Rückführleitung 9 zugeführt. Die Regeleinrichtung 11 is so ausgebildet, daß je nach Rohwasserhärte einstellbar etwa ein Drittel der durch die Nanofiltrationsmembran 8 hindurchgetretenen Wassermenge über die Abzweigung 10 in die Zisterne 12 bzw. den Kanal 13 abgeschlämmt wird. Der übrige Teil wird über die Rückführleitung 9 der Eingangsseite der Filtereinrichtung 1 erneut zugeführt. Dieser Anteil zusammen mit weiterem über die Zuführleitung 5 zugleiteten Frischwasser wird einer weiteren Filtration zur Erzeugung weiteren gefilterten Wassers zugeführt. Das gefilterte Wasser tritt über den Ausgang 4 in den Vorratsbehälter 14 aus und wird in diesem trinkwassergerecht zwischengelagert und bei Bedarf der Verbrauchsstelle 3, also insbesondere einem Hauswassernetz, zugeführt. Die Steuerung steuert das Steuerventil 16 so an, daß dieses nur dann öffnet, wenn eine Entnahme erfolgt.

In dem obigen Ausführungsbeispiel ist 12 als Zisterne beschrieben. Es kann sich dabei aber auch um einen Brauchwasserkreislauf, also beispielsweise Wasser für die Toillettenspülung oder ähnliches, handeln.

## Patentansprüche

1. Einrichtung zum Herabsetzen der Wasserhärte mit einer Filtereinrichtung (1), die eingangsseitig mit einer Eingangsleitung (6) und ausgangsseitig mit einer Verbrauchsstelle (3) verbindbar ist, wobei zwischen Ein- und Ausgang ( 2, 4) der Filtereinrichtung (1) eine Nanofiltrationsmembran (8) vorgesehen ist und der eingangsseitig von der Nanofiltrationsmembran (8) befindliche Raum (7) der Filtereinrichtung (1) mit einer Rückführleitung (9) verbunden ist, die in der Eingangsleitung (6) mündet.

2. Einrichtung zum Herabsetzen der Wasserhärte nach Anspruch 1, dadurch gekennzeichnet,
daß der eingangsseitig von der Nanofiltrationsmembran (8) befindliche Raum (7) über eine Regeleinrichtung (11) mit einem Abschlämmausgang verbindbar ist.

3. Einrichtung zum Herabsetzen der Wasserhärte nach Anspruch 2, dadurch gekennzeichnet,
daß der Abschlämmausgang mit einer Zisterne (12) bzw. einem Abwasserkanal (13) verbindbar ist.

4. Einrichtung zum Herabsetzen der Wasserhärte nach einem der Ansprüche 1 bis 3, dadurch gekennzeichnet,
daß der Ausgang (4) der Filtereinrichtung (8) mit einem Vorratsbehälter (14) verbunden ist, der seinerseits mit der Verbrauchsstelle (3) verbindbar ist.

5. Einrichtung zum Herabsetzen der Wasserhärte nach einem der Ansprüche 1 bis 4, dadurch gekennzeichnet,
daß zwischen Rückführleitung (9) und Filtereinrichtung (1) eine Pumpe (17) vorgesehen ist.

6. Einrichtung zum Herabsetzen der Wasserhärte nach einem der Ansprüche 1 bis 5, dadurch gekennzeichnet,
daß zwischen Zufuhrleitung (5) und Filtereinrichtung (1) ein von einer Steuerung (18) zu betätigendes Ventil (16) vorgesehen ist.

7. Einrichtung zum Herabsetzen der Wasserhärte nach Anspruch 6, dadurch gekennzeichnet,
daß das Ventil (16) zwischen der Zufuhrleitung (5) und der Einmündung der Rückführleitung (9) vorgesehen ist.

8. Einrichtung zum Herabsetzen der Wasserhärte nach einem der Ansprüche 2 bis 7, dadurch gekennzeichnet,
daß eine Steuerung (18) zum Ansteuern des Steuerventiles (16) vorgesehen ist.
